# EUROPÄISCHE PATENTSCHRIFT

(11) **EP 4 148 516 B1**
(45) Veröffentlichungstag und Bekanntmachung des Hinweises auf die Patenterteilung: **15.05.2024**
(21) Anmeldenummer: 21195451.6
(22) Anmeldetag: 08.09.2021
(51) Int. Cl.: G05B 19/418, H04L 51/046

(54) **VERFAHREN ZUR BETRIEBSERLEICHTERUNG FÜR NUTZER EINES INDUSTRIELLEN AUTOMATISIERUNGSVERBUNDES UND PROZESSLEITSYSTEM**
METHOD FOR MAKING IT EASIER FOR A USER TO OPERATE AN INDUSTRIAL AUTOMATION SYSTEM AND PROCESS CONTROL SYSTEM
PROCÉDÉ PERMETTANT DE FACILITER LE FONCTIONNEMENT POUR LES UTILISATEURS D'UNE INTERCONNEXION D'AUTOMATISATION INDUSTRIELLE ET SYSTÈME DE COMMANDE DE PROCESSUS

(43) Veröffentlichungstag der Anmeldung: 15.03.2023
(73) Patentinhaber: Siemens Aktiengesellschaft, 80333 München (DE)
(72) Erfinder: Dallmann, Michael, 90530 Wendelstein (DE); Edenharter, Johannes, 90584 Allersberg (DE); Esteve Velázquez, Miriam, 90461 Nürnberg (DE); Kollinger, David, 90571 Schwaig (DE); Langer, Gerhard, 91052 Erlangen (DE); Liu, Kai, 90562 Heroldsberg (DE)
(74) Vertreter: Siemens Patent Attorneys

(56) Entgegenhaltungen:
- WO-A1-2021/113896
- DE-A1-102018 007 943
- US-A1- 2017 173 888

## Beschreibung

Die Erfindung betrifft ein Verfahren zur Betriebserleichterung für Nutzer eines industriellen Automatisierungsverbundes mit einer Mehrzahl an Automatisierungsgeräten, wobei in dem Automatisierungsverbund Arbeitsaufträge für die Automatisierungsgeräte verwaltet und über ein Kommunikationsnetzwerk übermittelt werden.

Auch betrifft die Erfindung ein Prozessleitsystem für einen Nutzer, ausgestaltet zur Steuerung und Beobachtung eines industriellen Automatisierungsverbundes mit einer Mehrzahl an Automatisierungsgeräten, aufweisend ein Auftragsvergabemittel ausgestaltet Arbeitsaufträge für die Automatisierungsgeräte zu verwalten und über ein Kommunikationsnetzwerk an die Automatisierungsgeräte zu übermitteln.

Zur Wartung, Pflege und Bedienung von industriellen Automatisierungsanlagen bzw. Automatisierungsverbünden, werden verschiedene Arten von Mitarbeitern eingesetzt, wie Bediener, Arbeiter, Planer, Anwendungstechniker usw., die unterschiedliche Arten von Informationen benötigen, um ihre Arbeit zu erledigen. Beispiele für solche Informationen sind Fragen rund um Fertigungsaufträge oder Hinweise zum Umgang mit Geräten und Automatisierungskomponenten. In solchen Fällen benötigen die verschiedenen Nutzer zusätzliche Informationen oder müssen in kurzer Zeit Informationen untereinander austauschen.

Traditionelle Systeme zur Überwachung von Industrieanlagen und Aufträgen, wie SCADA- und MES-Systeme, liefern Informationen von Aktionen oder Alarmen, um den Nutzern über besondere Bedingungen zu informieren. Bei Auftragsbestellungen oder der Vergabe von Arbeitsaufträgen werden häufig Kommentare verwendet, um die Nutzer über zusätzliche Bedingungen zu informieren. Es gibt mehrere Nachteile bzw. Einschränkungen bei dieser Art von Kommunikationsmethoden:
Alarmsysteme wurden entwickelt, um Bedingungen (wie Sensorschwellwerte) zu beobachten und Ratschläge an bestimmte Benutzerrollen zu senden. Es ist nicht möglich, bei Problemen, Anweisungen durch einen Nutzer für Geräte zu übergeben oder Fragen an andere Nutzer zur Lösung eines Problems zu stellen. Notizen von Aktionen funktionieren auf ähnliche Weise. Sie müssen ebenso vordefiniert sein und erlauben keine interaktive Kommunikation.

Kommentare in Bestellungen oder Arbeitsaufträgen werden nur zu Beginn einer Aufgabe gelesen. Im Falle von sich ändernden Anforderungen in einer laufenden Reihenfolge (z.B. Ändern von Zeitfenstern) sind solche Kommentarfelder nicht geeignet, um diese Informationen an die Nutzer weiterzugeben. Des Weiteren hat der Betreiber keine Möglichkeit, Fragen zu Arbeitsaufträgen zu stellen.

Nach dem Stand der Technik sind im Konsumerbereich Chat-Systeme zur Kommunikation zwischen Personen bekannt. Leider kann bei dieser Art von Chat-Systemen die Kommunikation nicht direkt für industrielle Zwecke übertragen werden, da Chats Personen zugeordnet sind. Für industrielle Zwecke muss dieses Prinzip modifiziert werden, da Menschen in Schichten arbeiten und Ressourcen für Aufträge oder Prozessschritte von Aufträgen auf Abruf zugewiesen werden. Darüber hinaus dürfen klassische Chat-Systeme aus Sicherheitsgründen nicht innerhalb von Fabriken verwendet werden.

Die DE 10 2018 007 943 A1 offenbart ein Verfahren zum Betrieb eines industriellen Automatisierungsverbunds mit einer Mehrzahl an Automatisierungsgeräten.

Die US 2017/173888 A1 beschreibt einen Nachrichtendienst für eine Fabrik mit 3D-Druckern.

Es ist daher Aufgabe der Erfindung, bekannte Chat-Systeme derart zu modifizieren und für die Anforderungen von industriellen Anlagen zu ertüchtigen.

Für das eingangs genannte Verfahren zur Betriebserleichterung für Nutzer eines industriellen Automatisierungsverbundes mit einer Mehrzahl an Automatisierungsgeräten, wobei in dem Automatisierungsverbund Arbeitsaufträge für die Automatisierungsgeräte verwaltet und über ein Kommunikationsnetzwerk übermittelt werden, wird die Aufgabe dadurch gelöst, dass ein Nachrichtendienst zum Austausch von Nachrichten zwischen Teilnehmern mit einer Teilnehmerliste betrieben wird, die Teilnehmerliste mit virtuellen Rollen als Teilnehmer vorbelegt wird und damit die Teilnehmer in der Teilnehmerliste zu variablen Teilnehmern werden, wobei den virtuellen Rollen die Nutzer, die Arbeitsaufträge oder die Automatisierungsgeräte zugewiesen werden, und es wird einer ersten virtuellen Rolle eine Verantwortlichkeit für die Arbeitsaufträge zugewiesen und einem ersten Nutzer die erste virtuelle Rolle zugewiesen, wobei bei der Ermittlung eines Arbeitsauftrages automatisiert ein Kommunikations-Forum für den Nachrichtenaustausch zwischen der virtuellen Rolle des Arbeitsauftrages und der ersten virtuellen Rolle des ersten Nutzers erstellt wird.

Mit Vorteil ist nun ein gezieltes Austauschen von Nachrichten zwischen den Nutzern, den Arbeitsaufträgen und den Automatisierungsgeräten über die virtuellen Rollen möglich.

Erfindungsgemäß wird für Arbeitsaufträge eine Benutzerrolle definiert, die für die Verwaltung solcher Arbeitsaufträge zuständig ist, z.B. ist ein Anwendungstechniker für die Arbeitsaufträge zuständig. Bei einer auftragsbasierten Erstellung von Kommunikations-Foren bzw. bei auftragsbasierten Chats könnte ein solcher Anwendungstechniker einem Auftrag jederzeit während der Ausführung oder vor der Ausführung Informationen hinzufügen, z.B. bei einem Druckauftrag zum selektiven Laserschmelzen muss ein spezielles Substrat verwendet werden, diese Information könnte der Auftragstechniker in einem Chat kundgeben. Ein Operator (oder eine andere Benutzerrolle), der diesen Auftrag oder einen bestimmten Schritt dieses Auftrages ausführen wird, erhält eine Benachrichtigung über diesen Chat. Wenn ein Benutzer zusätzliche Informationen benötigt, kann er auf diesen Chat antworten und Fragen stellen. Der zuständige Anwendungstechniker erhält die Antwort der Frage und könnte auch Antworten.

Ein weiterer Vorteil dieser Realisierung ist es, dass in diesem Fall verschiedene Benutzer beteiligt sein können. Aufgrund von Schichtarbeit könnte zu einem späteren Zeitpunkt ein zweiter Benutzer die Rolle als Anwendungstechniker über Zuweisung der virtuellen Rolle übernehmen.

Im Vergleich zu herkömmlichen Kommentaren erhält der zugewiesene Benutzer über die virtuelle Rolle eine Meldung, dass er sich um einen bestimmten Punkt in der Automatisierungsanlage kümmern muss. Normalerweise werden Kommentare nur zu Beginn einer Bestellung gelesen, aber nicht später. Ein anderer Kollege, der später den Auftrag übernimmt, erhält die gleichen Informationen, ohne dass bei einem Schichtwechsel noch einmal Nachrichten gesendet werden müssen, weil er durch die erneute Zuweisung der virtuellen Rolle auf den Chat der virtuellen Rolle Zugriff hat.

Mit dem neuen Verfahren und insbesondere der Vergabe der virtuellen Rollen ist eine direkte Kommunikation zwischen Assets einer Anlage möglich. Auf vorteilhafte Weise geht die Erfindung gegenüber den herkömmlichen Chat-Tools einen Schritt weiter und ermöglicht eine automatische Erzeugung eines Chats für einen Auftrag inklusive einer bidirektionalen Verlinkung der Teilnehmer, sobald jemand einen Kommentar/Frage, Problem zu diesem Auftrag eingibt. Dabei werden automatisch die relevanten virtuellen Rollen als Teilnehmer in diesem Chat aufgenommen und eine Gruppe von Teilnehmern ist entstanden.

Demnach ist es vorteilhaft, wenn zusätzlich die virtuelle Rolle des Automatisierungsgerätes, an das der Arbeitsauftrag übermittelt wurde, mit in das Kommunikations-Forum aufgenommen wird.

Weiterhin ist es vorteilhaft, wenn bei einem Schichtbeginn dem ersten Nutzer die erste virtuelle Rolle zugewiesen wird und bei einem Schichtende dem ersten Nutzer die erste virtuelle Rolle entzogen wird. Aufgrund von Schichtplänen kann nun nach der Beendung der Schicht des ersten Benutzers ein zweiter Benutzer die Rolle als ein Anwendungstechniker übernehmen.

Dem Personal bzw. den Benutzern können abhängig von einem Schichtplan die virtuellen Rollen zugewiesen werden und den virtuellen Rollen können zusätzlich unterschiedliche Rechte und Zugriffsregeln bezogen auf den manuellen Eingriff in den Betrieb des Automatisierungsverbundes zugewiesen werden.

Im Hinblick auf eine weitere Verbesserung der Informationsübermittlung ist es von Vorteil, wenn für den Fall, dass ein Automatisierungsgerät an einem Kommunikations-Forum teilnimmt, dass jeweilige Kommunikations-Forum in Form eines Chat-Fenster einem Anzeigeobjekt für das Automatisierungsgerät zugeordnet wird, wobei das Anzeigeobjekt auf einem Bedienbild des Automatisierungsverbundes dargestellt wird und somit bei Bedarf das Chat-Fenster in der Nähe des Anzeigeobjektes eingeblendet wird.

Eine weitere Steigerung der Informationsdarstellung wird dadurch erreicht, wenn zusätzlich in dem Chat-Fenster Prozessgrößen des industriellen Automatisierungsverbundes oder des jeweiligen dem Anzeigeobjekt zugeordnetem Automatisierungsgerät eingeblendet werden.

Weiterhin ist es vorteilhaft, wenn ausgehend von den dem Automatisierungsgerät zugeordnetem Anzeigeobjekt interaktiv auf dem Bedienbild ein Kommunikations-Forum für die dem Automatisierungsgerät zugeordnete virtuelle Rolle erstellt wird.

Beispielsweise bei Problemen mit einem Automatisierungsgerät, z.B. nach einem Druck mit einem 3D-Drucker muss ein Ersatzteil ausgetauscht werden, kann ein Nutzer einem dem Automatisierungsgerät nämlich dem 3D-Drucker, zugewiesenen Chat erstellen. Dieser Chat wird an alle Operatoren gesendet, die später demselben Automatisierungsgerät zugewiesen werden, und ebenfalls an die Benutzerrolle dieses Automatisierungsgerätes. Alle virtuellen Rollen oder Nutzer die später mit dem 3D-Drucker zu tun haben, können diesen Hinweis lesen. Dies ist besonders vorteilhaft, weil sich 3D-Druckvorgänge über Tage oder sogar Wochen hinziehen können und damit eine Vielzahl von unterschiedlichen Nutzern mit dem Druck beauftragt sind.

Im Hinblick auf ein effizientes Speichermanagement ist es von Vorteil, wenn die Zuweisung von Arbeitsaufträgen zu den virtuellen Rollen nach einer vorbestimmten Zeit gelöscht wird.

Auch ist es vorteilhaft, wenn die Zuweisung von Arbeitsaufträgen zu den virtuellen Rollen und deren Kommunikationsverlauf nach einer Fertigmeldung des jeweiligen Arbeitsauftrages archiviert und anschließend gelöscht werden.

Zu beachten ist, dass sich die Anzahl an Automatisierungsgeräten in einem Automatisierungsverbund nicht wesentlich ändert, aber die Anzahl von Arbeitsaufträgen zunimmt. Das bedeutet, dass das Verfahren in der Lage sein muss, bei Bedarf neue virtuelle Nutzer hinzuzufügen. Um die Teilnehmerliste für ein solches System zu minimieren, müssen "alte" virtuelle Nutzer oder Rollen nach einem bestimmten Zeitraum archiviert werden, ähnlich wie Auftragsdaten. Dazu könnten Zeitstempel aus dem Chat-System verwendet werden, z.B. könnte man alle Bestellungen, die älter als 1 Jahr sind, archivieren. Um diesen Vorgang zu optimieren, könnte ein Auftragsvergabemittel eine Liste von abgeschlossenen Arbeitsaufträgen bereitstellen. Basierend auf dieser Liste könnten Chats archiviert werden.

Vorrichtungsgemäß wird die eingangs genannte Aufgabe durch ein Prozessleitsystem für einen Nutzer, ausgestaltet zur Steuerung und Beobachtung eines industriellen Automatisierungsverbundes mit einer Mehrzahl an Automatisierungsgeräten, aufweisend ein Auftragsvergabemittel ausgestaltet, Arbeitsaufträge für die Automatisierungsgeräte zu verwalten und über ein Kommunikationsnetzwerk an die Automatisierungsgeräte zu übermitteln, dadurch gelöst, dass ein Nachrichtendienst mit einer Teilnehmerliste vorhanden ist, welche ausgestaltet ist, zum Austausch von Nachrichten zwischen Teilnehmern, weiterhin ist ein Vorbelegungsmittel vorhanden, welches ausgestaltet ist, die Teilnehmerliste mit virtuellen Rollen als Teilnehmer vorzubelegen und damit die Teilnehmer in der Teilnehmerliste zu variablen Teilnehmern zu ertüchtigen, weiterhin ist ein Zuordnungsmittel vorhanden, welches ausgestaltet ist, den virtuellen Rollen die Nutzer, die Arbeitsaufträge oder die Automatisierungsgeräte zuzuordnen, weiterhin weist das Prozessleitsystem einen Forumsgenerator auf, welcher ausgestaltet ist, bei der Übermittlung eines Arbeitsauftrages automatisiert ein Kommunikations-Forum für den Nachrichtenaustausch zwischen der virtuellen Rolle des Arbeitsauftrages und der virtuellen Rolle eines Nutzers zu erstellen.

Mit der Einführung der virtuellen Rollen ist es nun möglich, ein gezieltes Austauschen von Nachrichten zwischen den Nutzern, den Arbeitsaufträgen und den Automatisierungsgeräten zu ermöglichen.

Eine weitere Verbesserung des Forumsgenerators für das Prozessleitsystem sieht vor, dass der Forumsgenerator so ausgestaltet ist, zusätzlich die virtuelle Rolle des Automatisierungsgerätes, an das der Arbeitsauftrag übermittelt wurde, mit in das Kommunikations-Forum aufzunehmen.

Insbesondere für einen Wechselbetrieb bzw. ein Schichtbetrieb weist das Prozessleitsystem vorteilhafter Weise ein Benutzerverwaltungs-Mittel auf, welches ausgestaltet ist, bei einem Schichtbeginn einem ersten Nutzer eine virtuelle Rolle zuzuweisen und bei einem Schichtende dem ersten Nutzer wieder die virtuelle Rolle zu entziehen. Dabei ist das Benutzerverwaltungs-Mittel dazu ausgestaltet, nach dem Schichtende des ersten Nutzers für den Schichtbeginn eines zweiten Nutzers ihm diese virtuelle Rolle zuzuweisen.

Weiterhin ist es von Vorteil, wenn das Prozessleitsystem ein Anzeigegerät aufweist, welches ein Bedienbild des Automatisierungsverbundes mit Anzeigeobjekten für die Automatisierungsgeräte darstellt, wobei dazu das Bedienbild ausgestaltet ist, dass für das Automatisierungsgerät, welches an einem Kommunikations-Forum teilnimmt, das jeweilige Kommunikations-Forum in Form eines Chat-Fensters mit oder in der Nähe der Anzeigeobjekte dargestellt wird.

Im Sinne eines optimierten Speichermanagements weist das Prozessleitsystem ein Speicherverwaltungs-Mittel auf, welches ausgestaltet ist, die Zuweisung von Arbeitsaufträgen zu den virtuellen Rollen nach einer vorbestimmten Zeit zu löschen und/oder die Zuweisung von Arbeitsaufträgen zu den virtuellen Rollen und deren Kommunikationsverlauf nach einer Fertigmeldung des jeweiligen Arbeitsauftrages zu archivieren und anschließend zu löschen.

Erfindungsgemäß können nun neben einer Verwaltung von Chat-Verläufen für Personenrollen nun zusätzliche für Arbeitsaufträge und Maschinen Chat-Verläufe verwaltet werden. Mit der Vergabe einer virtuellen Rolle beispielsweise an eine Maschine verfügt auch die Maschine über ein geeignetes Chat-Profil in der Teilnehmerliste. In dem zugehörigen Chat der Maschine lassen sich nun weitere Informationen hinterlegen und gezielt Gruppen von Mitarbeitern verfügbar machen.

Auch die vernetzten Maschinen bzw. die vernetzten Automatisierungsgeräte können Nachrichten erstellen. Das können beispielsweise Störungsmeldungen, Hinweise auf anstehende Wartung etc. sein. Alles dies erscheint in einem Kommunikations-Forum als Nachrichten.

Die Zeichnung zeigt ein Ausführungsbeispiel der Erfindung. Es zeigt:
- FIG 1: ein an einen Automatisierungsverbund angeschlossenes Prozessleitsystem,
- FIG 2: eine Auftragsliste eingeblendet in einem Bedienbild und
- FIG 3: ein Bedienbild mit einem Anzeigeobjekt zur Generierung eines Push up-Menüs.

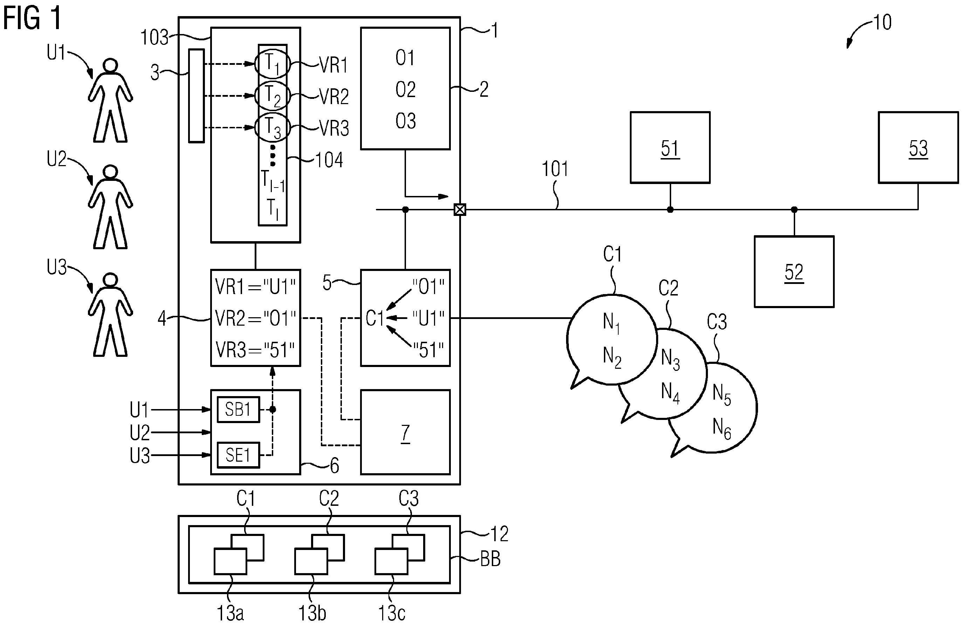

Die FIG 1 zeigt ein Prozessleitsystem 1 für einen ersten Nutzer U1, einen zweiten Nutzer U2 und einen dritten Nutzer U3, wobei die Nutzer U1,U2,U3 zum Teil in einem Schichtbetrieb zueinander das Prozessleitsystem 1 bedienen. Das Prozessleitsystem 1 ist ausgestaltet, zur Steuerung und/oder Beobachtung eines industriellen Automatisierungsverbundes 10 mit einer Mehrzahl an Automatisierungsgeräten 51,52,53, wobei ein erstes Automatisierungsgerät 51, ein zweites Automatisierungsgerät 52 und ein drittes Automatisierungsgeräte 53 über ein Kommunikationsnetzwerk 101 miteinander in Verbindung stehen. Das Prozessleitsystem 1 weist ein Auftragsvergabemittel 2 auf, welches ausgestaltet ist, Arbeitsaufträge 01,02,03 für die Automatisierungsgeräte 51,52,53 zu verwalten und über das Kommunikationsnetzwerk 101 an die Automatisierungsgeräte 51,52,53 zu übermitteln.

Damit ein gezieltes Austauschen von Nachrichten Nᵢ zwischen den Benutzern U1,U2,U3 den Arbeitsaufträgen 01,02,03 und den Automatisierungsgeräten 51,52,53 ermöglicht wird, ist ein Nachrichtendienst 103 mit einer Teilnehmerliste 104 vorhanden, welcher ausgestaltet ist zum Austausch von Nachrichten Nᵢ zwischen Teilnehmern Tₑ. Ein Vorbelegungsmittel 3 ist ausgestaltet die Teilnehmerliste 104 mit virtuellen Rollen VR1,VR2,VR3 als Teilnehmer Tₑ vorzubelegen und damit die Teilnehmer Tₑ in der Teilnehmerliste 104 zu variablen Teilnehmern zu ertüchtigen. Ein Zuordnungsmittel 4 ist ausgestaltet, den virtuellen Rollen VR1,VR2,VR3 die Nutzer U1,U2,U3, die Arbeitsaufträge 01,02,03 oder die Automatisierungsgeräte 51,52,53 zuzuordnen.

Über ein Benutzerverwaltungs-Mittel 6 wird dem ersten Benutzer U1, welcher für die Arbeitsaufträge verantwortlich ist, mit einem Schichtbeginn SB1 unter Zuhilfenahme des Zuordnungsmittels 4 die erste virtuelle Rolle VR1 zugewiesen. Damit hat die erste virtuelle Rolle VR1 über den ersten Nutzer U1 eine Verantwortlichkeit für die Arbeitsaufträge 01,02,03 erhalten. Wird nun beispielsweise ein erster Arbeitsauftrag 01 abgesendet, so wird über einen Forums-Generator 5 mit der Kenntnis das die erste virtuelle Rolle VR 1 für die Arbeitsaufträge zuständig ist, für den ersten Arbeitsauftrag 01 und dem ersten Benutzer U1 bzw. der zugewiesenen ersten virtuellen Rolle VR1 ein erstes Kommunikations-Forum C1 erstellt. Weiterhin wird zusätzlich eine dritte virtuelle Rolle VR3 für das Automatisierungsgerät 51,52,53 an das der erste Arbeitsauftrag 01 übermittelt wurde, mit in das erste Kommunikations-Forum C1 aufgenommen. In den so entstehenden Kommunikations-Foren 01,02,03 bzw. den so entstandenen Chat-Gruppen können nun Nachrichten N₂, N₂, ..., N₅, N₆ ausgetauscht werden.

Das Benutzerverwaltungs-Mittel 6 ist weiterhin ausgestaltet, bei einem Schichtbeginn SB1 einem ersten Nutzer U1 die virtuelle Rolle VR1 zuzuweisen und bei einem Schichtende SE1 dem ersten Nutzer U1 die virtuelle Rolle VR1 wieder zu entziehen. Bei dem Schichtende SE1 des ersten Nutzers U1 könnte z.B. einem zweiten Nutzer U2 nun durch Zuweisen der ersten virtuellen Rolle VR1 die Verantwortung übertragen werden und nach dem Ende seiner Schicht wieder durch Entziehen der ersten virtuellen Rolle VR1 entzogen werden.

Für den Fall, dass ein Automatisierungsgerät 51,52,53 an einen Kommunikations-Forum C1,C2,C3 teilnimmt, wird das jeweilige Kommunikations-Forum C1,C2,C3 in Form eines Chat-Fensters W1,W2,W3 einem Anzeigeobjekt 13a,13b,13c für das jeweilige Automatisierungsgerät 51,52,53 zugeordnet. Das Anzeigeobjekt 13a,13b,13c wird innerhalb eines Anzeigegerätes 12 auf einem Bedienbild BB dargestellt und somit bei Bedarf das Chat-Fenster W1,W2,W3 in der Nähe des zugehörigen Anzeigeobjektes 13a,13b,13c eingeblendet.

Mit Hilfe eines Speicherverwaltungs-Mittels 7 werden die Zuweisungen von Arbeitsaufträgen 01,02,03 zu den virtuellen Rollen VR1,VR2,VR3 nach einer vorbestimmten Zeit gelöscht und/oder die Zuweisung von den Arbeitsaufträgen 01,02,03 zu den virtuellen Rollen VR1,VR2,VR3 und deren Kommunikationsverlauf werden nach einer Fertigmeldung des jeweiligen Arbeitsauftrages 01,02,03 archiviert und anschließend gelöscht.

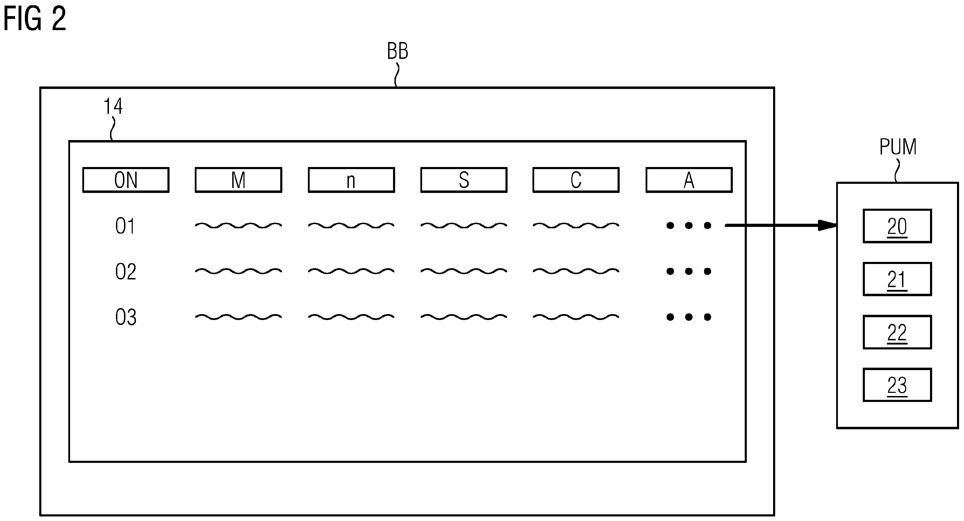

Die FIG 2 zeigt eine Auftragsliste 14, welche ebenfalls in einem Bedienbild BB angezeigt werden kann. In der obersten Zeile der Auftragsliste 14 sind der Reihe nach ein Auftragsname ON, eine Materialzusammensetzung M, eine Menge n, eine Spezifikation S, eine Angabe zur Anzahl der zugehörigen Chateinträge C und eine Aktion A angeordnet. In der Spalte der Auftragsnamen ON findet sich der erste Arbeitsauftrag 01, der zweite Arbeitsauftrag 02 und der dritte Arbeitsauftrag 03 wieder. In der Spalte für die Aktion A sind beispielsweise über drei Punkte ein Push up-Menü PUM anwählbar. In diesem Push up-Menü PUM werden interaktive Buttons angezeigt. Durch Klicken auf einen ersten Button 20 kann ein Kommunikations-Forum erzeugt werden, durch Klicken auf einen zweiten Button 21 können existierende Chats abgerufen werden, durch Klicken auf einen dritten Button 22 kann der jeweilige Auftrag bearbeitet werden und durch Klicken auf einen vierten Button 23 kann der jeweilige Auftrag gelöscht werden.

Mit Vorteil kann man nun über das Push up-Menü PUM und der Auftragsliste 14 mit der eingeblendeten Aktion A Spalte den bereits abgeschickten Arbeitsaufträgen 01,02,03 noch eine Chat-Nachricht zuordnen oder sogar einen Chat in Form eines Kommunikations-Forums erzeugen.

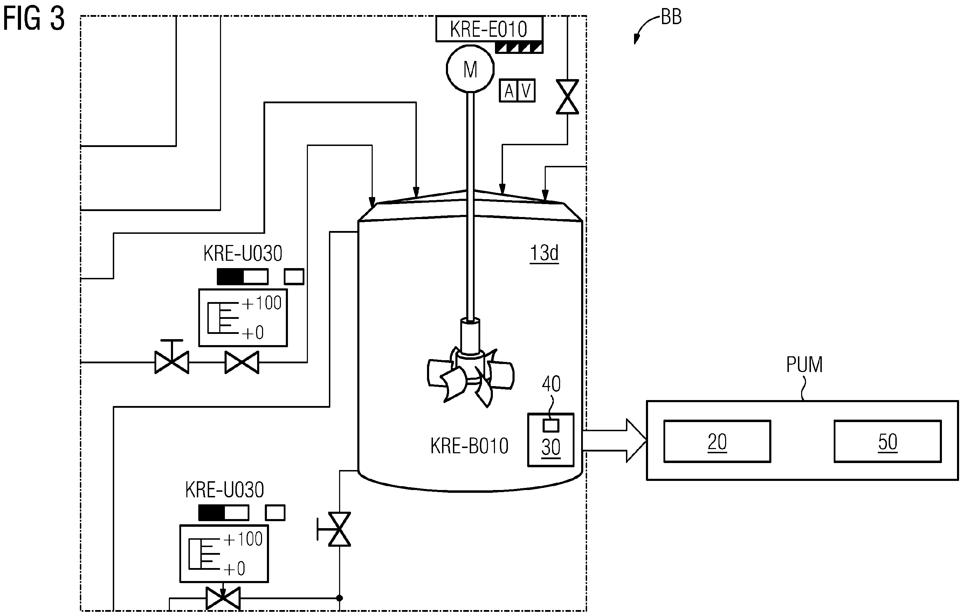

Mit der FIG 3 wird eine vorteilhafte Ausgestaltung eines vierten Anzeigeobjektes 13d innerhalb eines Bedienbildes BB aufgezeigt. So kann beispielsweise in dem Bedienbild BB dem vierten Anzeigeobjekt 13d ein Kessel mit einem Rührwerk zugeordnet werden. Ein für dieses Rührwerk zuständige Bediener kann bei Problemen über einen weiteren Aktionsbutton 30, der vorteilhafterweise eine Anzeige 40 enthält, in der die Anzahl der zugeordneten Chat Einträge angegeben werden, wiederum ein Push up-Menü PUM erzeugen und in dem Push up-Menü kann er auf den Button 20 "erzeuge Chat" klicken und somit eine Nachricht an die mit dem Chat verknüpften Teilnehmern erzeugen. Alternativ kann er in dem Push up-Menü PUM auf einen weiteren Button 50 klicken und eine Übersicht der existierenden Chateinträge bekommen.

## Patentansprüche

1. Verfahren zur Betriebserleichterung für Nutzer (U1,U2,U3) eines industriellen Automatisierungsverbundes (10) mit einer Mehrzahl an Automatisierungsgeräten (51,52,53), wobei in dem Automatisierungsverbund (10) Arbeitsaufträge (01,02,03) für die Automatisierungsgeräte (51,52,53) verwaltet und über ein Kommunikationsnetzwerk (101) übermittelt werden, wobei ein Nachrichtendienst (103) zum Austausch von Nachrichten (Ni) zwischen Teilnehmern (Tₑ) mit einer Teilnehmerliste (104) betrieben wird,
die Teilnehmerliste (104) mit virtuellen Rollen (VR1,VR2,VR3) als Teilnehmer (Tₑ) vorbelegt wird und damit die Teilnehmer (Tₑ) in der Teilnehmerliste (104) zu variablen Teilnehmern (Tₑ) werden, wobei den virtuellen Rollen (VR1,VR2,VR3) die Nutzer (U1,U2,U3), die Arbeitsaufträge (01,02,03) oder die Automatisierungsgeräte (51,52,53) zugewiesen werden,
**dadurch gekennzeichnet, dass** einer ersten virtuellen Rolle (VR1) eine Verantwortlichkeit für die Arbeitsaufträge (01,02,03) zugewiesen wird und einem ersten Nutzer (U1) die erste virtuelle Rolle (VR1) zugewiesen wird, wobei bei der Übermittlung eines Arbeitsauftrages (01,02,03) automatisiert ein Kommunikations-Forum (C1,C2,C3) für den Nachrichtenaustausch zwischen der virtuellen Rolle (VR2) des Arbeitsauftrages (01,02,03) und der ersten virtuellen Rolle (VR1) des ersten Nutzers (U1) erstellt wird.

2. Verfahren nach Anspruch 1, wobei zusätzlich die virtuelle Rolle (VR3) des Automatisierungsgerätes (51,52,53), an das der Arbeitsauftrag (01,02,03) übermittelt wurde, mit in das Kommunikations-Forum (C1,C2,C3) aufgenommen wird.

3. Verfahren nach Anspruch 1 oder 2, wobei bei einem Schichtbeginn (SB1) dem ersten Nutzer (U1) die erste virtuelle Rolle (VR1) zugewiesen wird und bei einem Schichtende (SE1) dem ersten Nutzer (U1) die erste virtuelle Rolle (VR1) entzogen wird.

4. Verfahren nach einem der Ansprüche 2 bis 3, wobei für den Fall, dass ein Automatisierungsgerät (51,52,53) an einem Kommunikations-Forum (C1,C2,C3) teilnimmt, das jeweilige Kommunikations-Forum (C1,C2,C3) in Form eines Chatfensters (W1,W2,W3) einem Anzeigeobjekt (13) für das Automatisierungsgerät (51,52,53) zugeordnet wird, wobei das Anzeigenobjekt (13) auf einem Bedienbild (BB) des Automatisierungsverbundes (10) dargestellt wird und somit bei Bedarf das Chatfenster (W1,W2,W3) in der Nähe des Anzeigeobjektes (13) eingeblendet wird.

5. Verfahren nach Anspruch 4, wobei zusätzlich in dem Chatfenster (W1,W2,W3) Prozessgrößen des industriellen Automatisierungsverbundes (10) oder des jeweiligen dem Anzeigeobjekt (13) zugeordnetem Automatisierungsgerät (51,52,53) eingeblendet werden.

6. Verfahren nach einem der Ansprüche 4 oder 5, wobei ausgehend von den dem Automatisierungsgerät (51,52,53) zugeordnetem Anzeigeobjekt (13) interaktiv auf dem Bedienbild (BB) ein Kommunikations-Forum (C1,C2,C3) für die dem Automatisierungsgerät (51,52,53) zugeordneten virtuellen Rollen (VR1,VR2,VR3) erstellt werden.

7. Verfahren nach einem der Ansprüche 1 bis 6, wobei die Zuweisung von Arbeitsaufträgen (01,02,03) zu den virtuellen Rollen (VR1,VR2,VR3) nach einer vorstimmten Zeit gelöscht wird.

8. Verfahren nach einem der Ansprüche 1 bis 7, wobei die Zuweisung von Arbeitsaufträgen (01,02,03) zu den virtuellen Rollen (VR1,VR2,VR3) und deren Kommunikationsverlauf nach einer Fertigmeldung des jeweiligen Arbeitsauftrages (01,02,03) archiviert und anschließend gelöscht werden.

9. Prozessleitsystem (1) für einen Nutzer (U1,U2,U3) ausgestaltet zur Steuerung und Beobachtung eines industriellen Automatisierungsverbundes (10) mit einer Mehrzahl an Automatisierungsgeräten (51,52,53), aufweisend
ein Auftragsvergabemittel (2) ausgestaltet Arbeitsaufträge (01,02,03) für die Automatisierungsgeräte (51,52,53) zu verwalten und über ein Kommunikationsnetzwerk (101) an die Automatisierungsgeräte (51,52,53) zu übermitteln, weiterhin aufweisend
einen Nachrichtendienst (103) mit einer Teilnehmerliste (104) ausgestaltet zum Austausch von Nachrichten (Ci) zwischen Teilnehmern (Tl),
ein Vorbelegungsmittel (3) ausgestaltet
die Teilnehmerliste (104) mit virtuellen Rollen (VR1,VR2,VR3) als Teilnehmer (Tl) vorzubelegen und damit die Teilnehmer (Tₗ) in der Teilnehmerliste (104) zu variablen Teilnehmern (Tl) zu ertüchtigen,
ein Zuordnungsmittel (4) ausgestaltet den virtuellen Rollen (VR1,VR2,VR3) die Nutzer (U1,U2,U3), die Arbeitsaufträge (01,02,03) oder die Automatisierungsgeräte (51,52,53) zuzuordnen,
**gekennzeichnet durch** einen Forumsgenerator (5), welcher ausgestaltet ist bei der Übermittlung eines Arbeitsauftrages (01,02,03) automatisiert ein Kommunikations-Forum (C1,C2,C3) für den Nachrichtenaustausch zwischen der virtuellen Rolle (VR2) des Arbeitsauftrages (01,02,03) und der virtuellen Rolle (VR1) eines Nutzer (U1) zu erstellen.

10. Prozessleitsystem (1) nach Anspruch 9, wobei der Forumsgenerator (5) weiterhin dazu ausgestaltet ist, zusätzlich die virtuelle Rolle (VR3) des Automatisierungsgerätes (51,52,53) an das der Arbeitsauftrag (01,02,03) übermittelt wurde, mit in das Kommunikations-Forum (C1,C2,C3) aufzunehmen.

11. Prozessleitsystem (1) nach einem der Ansprüche 9 bis 10, weiterhin aufweisend ein Benutzerverwaltungs-Mittel (6), welches ausgestaltet ist, bei einem Schichtbeginn (SB1) einem Nutzer (U1) eine virtuelle Rolle (VR1) zuzuweisen und bei einem Schichtende (SE1) dem Nutzer (U1) die virtuelle Rolle (VR1) wieder zu entziehen.

12. Prozessleitsystem (1) nach einem der Ansprüche 9 bis 11, aufweisend ein Anzeigegerät (12), welches ein Bedienbild (BB) des Automatisierungsverbundes (10) mit Anzeigeobjekten (13) für die Automatisierungsgeräte (51,52,53) darstellt, wobei das Bedienbild (BB) so ausgestaltet ist, dass für das Automatisierungsgerät(51,52,53), welches an einem Kommunikations-Forum (C1,C2,C3) teilnimmt, das jeweilige Kommunikations-Forum (C1,C2,C3) in Form eines Chatfensters (W1,W2,W3) mit oder in der Nähe der Anzeigenobjekte (13) darstellt.

13. Prozessleitsystem (1) nach einem der Ansprüche 9 bis 12, aufweisend, ein Speicherverwaltungsmittel (7) ausgestaltet die Zuweisung von Arbeitsaufträgen (01,02,03) zu den virtuellen Rollen (VR1,VR2,VR3) nach einer vorstimmten Zeit zu löschen und/oder die Zuweisung von Arbeitsaufträgen (01,02,03) zu den virtuellen Rollen (VR1,VR2,VR3) und deren Kommunikationsverlauf nach einer Fertigmeldung des jeweiligen Arbeitsauftrages (01,02,03) zu archivieren und anschließend zu löschen.

## Claims

1. Method for facilitating operations for users (U1,U2,U3) of an industrial automation network (10) with a plurality of automation devices (51,52,53), wherein work orders (01,02,03) for the automation devices (51,52,53) are managed in the automation network (10) and are transmitted via a communications network (101), wherein a message service (103) for exchanging messages (Ni) between participants (Tₑ) is operated with a list of participants (104),
the list of participants (104) is prepopulated with virtual roles (VR1,VR2,VR3) as participants (Tₑ) and thus the participants (Tₑ) in the list of participants (104) become variable participants (Tₑ), wherein the users (U1,U2,U3), the work orders (01,02,03) or the automation devices (51,52,53) are assigned to the virtual roles (VR1,VR2,VR3),
**characterised in that** a first virtual role (VR1) is assigned responsibility for the work orders (01,02,03) and a first user (U1) is assigned the first virtual role (VR1), wherein when a work order (01,02,03) is transmitted a communications forum (C1,C2,C3) is automatically created for the exchange of messages between the virtual role (VR2) of the work order (01,02,03) and the first virtual role (VR1) of the first user (U1) .

2. Method according to claim 1, wherein in addition the virtual role (VR3) of the automation device (51,52,53) to which the work order (01,02,03) was transmitted is included in the communications forum (C1,C2,C3).

3. Method according to one of claims 1 or 2, wherein the first user (U1) is assigned the first virtual role (VR1) at the start of a shift (SB1) and the first virtual role (VR1) is withdrawn from the first user (U1) again at the end of a shift (SE1) .

4. Method according to one of claims 2 to 3, wherein if an automation device (51,52,53) is participating in a communications forum (C1,C2,C3), the respective communications forum (C1,C2,C3) is assigned to a display object (13) for the automation device (51,52,53) in the form of a chat window (W1,W2,W3), wherein the display object (13) is displayed on an operating screen (BB) of the automation network (10) and thus if need be the chat window (W1,W2,W3) is superimposed in the vicinity of the display object (13).

5. Method according to claim 4, wherein additionally process variables of the industrial automation network (10) or of the respective automation device (51,52,53) assigned to the display object (13) are superimposed in the chat window (W1,W2,W3) .

6. Method according to one of claims 4 or 5, wherein based on the display object (13) assigned to the automation device (51,52,53) a communications forum (C1,C2,C3) for the virtual roles (VR1,VR2,VR3) assigned to the automation device (51,52,53) is created interactively on the operating screen (BB) .

7. Method according to one of claims 1 to 6, wherein the assignment of work orders (01,02,03) to the virtual roles (VR1,VR2,VR3) is deleted after a set time.

8. Method according to one of claims 1 to 7, wherein the assignment of work orders (01,02,03) to the virtual roles (VR1,VR2,VR3) and the communications log thereof are archived after a completion report for the respective work order (01,02,03) and are then deleted.

9. Process control system (1) for a user (U1,U2,U3) configured to control and monitor an industrial automation network (10) with a plurality of automation devices (51,52,53), having
an order assignment means (2) configured to manage work orders (01,02,03) for the automation devices (51,52,53) and to transmit them to the automation devices (51,52,53) via a communications network (101), furthermore having
a message service (103) with a list of participants (104) configured to exchange messages (Ci) between participants (Tl),
a prepopulation means (3) configured
to prepopulate the list of participants (104) with virtual roles (VR1,VR2,VR3) as participants (Tl) and thus to upgrade the participants (Tₗ) in the list of participants (104) to variable participants (Tl),
an assignment means (4) configured to assign the users (U1,U2,U3), the work orders (01,02,03) or the automation devices (51,52,53) to the virtual roles (VR1,VR2,VR3),
**characterised by** a forum generator (5) which is configured to automatically create a communications forum (C1,C2,C3) for the exchange of messages between the virtual role (VR2) of the work order (01,02,03) and the virtual role (VR1) of a user (U1) when a work order (01,02,03) is transmitted.

10. Process control system (1) according to claim 9, wherein the forum generator (5) is further configured additionally to include the virtual role (VR3) of the automation device (51,52,53) to which the work order (01,02,03) was transmitted in the communications forum (C1,C2,C3).

11. Process control system (1) according to one of claims 9 to 10, further having a user management means (6) which is configured to assign a user (U1) a virtual role (VR1) at the start of a shift (SB1) and to withdraw the virtual role (VR1) from the user (U1) again at the end of a shift (SE1).

12. Process control system (1) according to one of claims 9 to 11, having a display device (12) which displays an operating screen (BB) of the automation network (10) with display objects (13) for the automation devices (51,52,53), wherein the operating screen (BB) is configured such that it displays the respective communications forum (C1,C2,C3) in the form of a chat window (W1,W2,W3) with or in the vicinity of the display objects (13) for the automation device (51,52,53) which is participating in a communications forum (C1,C2,C3).

13. Process control system (1) according to one of claims 9 to 12, having a memory management means (7) configured to delete the assignment of work orders (01,02,03) to the virtual roles (VR1,VR2,VR3) after a set time and/or to archive the assignment of work orders (01,02,03) to the virtual roles (VR1,VR2,VR3) and the communication log thereof after a completion report for the respective work order (01,02,03) and then to delete them.

## Revendications

1. Procédé permettant à des utilisateurs (U1, U2, U3) de faciliter le fonctionnement d'une interconnexion (10) d'automatisation industrielle avec une pluralité d'appareils (51, 52, 53) d'automatisation, dans lequel, dans l'interconnexion (10) d'automatisation, on gère des ordres (01, 02, 03) de travail des appareils (51, 52, 53) d'automatisation et on les transmet par un réseau (101) de communication, dans lequel on fait fonctionner un service (103) de messagerie pour l'échange de messages (Ni) entre des participants (Tₑ) avec une liste (104) de participants,
on occupe à l'avance la liste (104) de participants par des rôles (VR1, VR2, VR3) virtuels comme participants (Tₑ) et ainsi les participants (Tₑ) de la liste (104) de participants deviennent des participants (Tₑ) variables, dans lequel aux rôles (VR1, VR2, VR3) virtuels on affecte les utilisateurs (U1, U2, U3), les ordres (O1, O2, O3) de travail ou les appareils (51, 52, 53) d'automatisation,
**caractérisé en ce que** l'on affecte à un premier rôle (VR1) virtuel une responsabilité pour les ordres (O1, O2, O3) de travail et à un premier utilisateur (U1) le premier rôle (VR1) virtuel, dans lequel lors de la transmission des ordres (O1, O2, O3) de travail, on établit de manière automatisée un forum (C1, C2, C3) de communication pour l'échange de messages entre le rôle (VR2) virtuel de l'ordre (O1, O2, O3) de travail et le premier rôle (VR1) virtuel du premier utilisateur (U1).

2. Procédé suivant la revendication 1, dans lequel on enregistre dans le forum (C1, C2, C3) de communication, supplémentairement, le rôle (VR3) virtuel de l'appareil (51, 52, 53) d'automatisation, auquel l'ordre (O1, O2, O3) de travail a été transmis.

3. Procédé suivant la revendication 1 ou 2, dans lequel lors d'un début (SB1) de travail, on affecte le premier rôle (VR1) virtuel au premier utilisateur (U1) et à une fin (SE1) de travail on retire au premier utilisateur (U1) le premier rôle (VR1) virtuel.

4. Procédé suivant l'une des revendications 2 à 3, dans lequel, dans le cas où un appareil (51, 52, 53) d'automatisation participe à un forum (C1, C2, C3) de communication, on associe le forum (C1, C2, C3) respectif de communication sous la forme d'une fenêtre (W1, W2, W3) de chat à un objet (13) d'affichage de l'appareil (51, 52, 53) d'automatisation, dans lequel on représente l'objet (13) d'affichage sur une image (BB) de service de l'interconnexion (10) d'automatisation et on incruste ainsi en cas de besoin la fenêtre (W1, W2, W3) de chat à proximité de l'objet (13) d'affichage.

5. Procédé suivant la revendication 4, dans lequel, en plus de la fenêtre (W1, W2, W3) de chat, on incruste des grandeurs de processus de l'interconnexion (10) d'automatisation industrielle ou de l'appareil (51, 52, 53) d'automatisation respectif associé à l'objet (13) d'indication.

6. Procédé suivant l'une des revendications 4 ou 5, dans lequel à partir de l'objet (13) d'indication associé à l'appareil (51, 52, 53) d'automatisation, on établit interactivement sur l'image (BB) de service un forum (C1, C2, C3) de communication pour les rôles (VR1, VR2, VR3) virtuels associé à l'appareil (51, 52, 53) d'automatisation.

7. Procédé suivant l'une des revendications 1 à 6, dans lequel on efface, après un temps déterminé à l'avance, l'affectation des ordres (O1, O2, O3) de travail aux rôles (VR1, VR2, VR3) virtuels.

8. Procédé suivant l'une des revendications 1 à 7, dans lequel on archive et ensuite on efface l'affectation des ordres (O1, O2, O3) de travail aux rôles (VR1, VR2, VR3) virtuels et leur tracé de communication après un message d'achèvement de l'ordre (O1, O2, O3) de travail respectif.

9. Système (1) de conduite de processus pour un utilisateur (U1, U2, U3) conformé pour la commande et l'observation d'une interconnexion (10) d'automatisation industrielle avec une pluralité d'appareils (51, 52, 53) d'automatisation, comportant un moyen (2) d'assignation d'ordre conformé pour gérer des ordres (O1, O2, O3) de travail des appareils (51, 52, 53) d'automatisation et pour les transmettre par un réseau (101) de communication aux appareils (51, 52, 53) d'automatisation, comportant en outre
un service (103) de messagerie, comprenant une liste (104) de participants conformée pour échanger des messages (Ci) entre des participants (T1),
un moyen (3) d'occupation préalable conformé pour occuper au préalable la liste (104) de participants par des rôles (VR1, VR2, VR3) virtuels comme participants (T1) et éduquer les participants (T₁) de la liste (104) de participants en participants (T1) variables,
un moyen (4) d'association conformé pour associer aux rôles (VR1, VR2, VR3) virtuels les utilisateurs (U1, U2, U3), les ordres (O1, O2, O3) de travail ou les appareils (51, 52, 53) d'automatisation,
**caractérisé par** un créateur (5) de forum, qui est conformé pour, lors de la transmission des ordres (O1, O2, O3) de travail, établir de manière automatisée un forum (C1, C2, C3) de communication pour l'échange de messages entre le rôle (VR2) virtuel de l'ordre (O1, O2, O3) de travail et le rôle (VR1) virtuel d'un utilisateur (U1).

10. Système (1) de conduite de processus suivant la revendication 9, dans lequel le créateur (5) de forum est conformé pour prendre dans le forum (C1, C2, C3) de communication supplémentairement le rôle (VR3) virtuel de l'appareil (51, 52, 53) d'automatisation, auquel l'ordre (O1, O2, O3) de travail a été transmis.

11. Système (1) de conduite de processus suivant l'une des revendications 9 à 10, comportant en outre un moyen (6) de gestion d'utilisateur, qui est conformé pour, lors d'un début (SB1) de travail, affecter un rôle (VR1) virtuel à un utilisateur (U1) et, lors d'une fin (SE1) de travail, retirer à nouveau le rôle (VR1) virtuel à l'utilisateur (U1).

12. Système (1) de conduite de processus suivant l'une des revendications 9 à 11, comportant un appareil (12) d'affichage, qui représente une image (BB) de service de l'interconnexion (10) d'automatisation par des objets (13) d'affichage des appareils (51, 52, 53) d'automatisation, dans lequel l'image (BB) de service est conformée, de manière à représenter, pour l'appareil (51, 52, 53) d'automatisation, qui prend part à un forum (C1, C2, C3) de communication, le forum (C1, C2, C3) de communication respectif sous la forme d'une fenêtre (W1, W2, W3) de chat avec ou à proximité des objets (13) d'affichage.

13. Système (1) de conduite de processus suivant l'une des revendications 9 à 12, comportant un moyen (7) de gestion de mémoire, conformé pour effacer après un temps déterminé à l'avance l'affectation d'ordre (O1, O2, O3) de travail aux rôles (VR1, VR2, VR3) virtuels et/ou archiver et ensuite effacer l'affectation des ordres (O1, O2, O3) de travail aux rôles (VR1, VR2, VR3) virtuels et leur tracé de communication après un message d'achèvement de l'ordre (O1, O2, O3) de travail respectif.
